# EUROPÄISCHE PATENTSCHRIFT

(11) **EP 2 494 686 B1**
(45) Veröffentlichungstag und Bekanntmachung des Hinweises auf die Patenterteilung: **15.04.2015**
(21) Anmeldenummer: 10771371.1
(22) Anmeldetag: 07.09.2010
(51) Int. Cl.: H02M 1/14, H02M 3/156, H02M 1/44, H02M 1/00

(54) **GLEICHSPANNUNGSSCHALTWANDLER UND GLEICHSPANNUNGSSCHALTWANDLUNGSVERFAHREN**
DIRECT CURRENT CONVERTER AND DIRECT CURRENT CONVERSION METHOD
CONVERTISSEUR DE COURANT CONTINU ET PROCÉDÉ DE CONVERSION DE COURANT CONTINU

(30) Priorität: 21.09.2009 EP 09170882
(43) Veröffentlichungstag der Anmeldung: 05.09.2012
(73) Patentinhaber: Collatis AG, 9100 Herisau (CH)
(72) Erfinder: GRAF VON CHRYSTOWSKI, Chris W., 80538 München (DE)
(74) Vertreter: Dilg, Andreas
(86) Internationale Anmeldenummer: PCT/EP2010/063089
(87) Internationale Veröffentlichungsnummer: WO 2011/032859

(56) Entgegenhaltungen:
- DE-A1- 3 546 161
- DE-A1- 10 040 879
- US-A- 4 755 922
- US-A1- 2002 172 056
- US-A1- 2005 141 246
- US-A1- 2006 209 571
- US-A1- 2006 209 582
- "MC34063A,MC33063A,DC-to-DC Converter Control Circuits - Semiconductor Technical Data" Motorola 1996, XP002587346 Gefunden im Internet: URL:http://www.ic-on-line.cn/IOL/datasheet /mc33063_78641.pdf [gefunden am 2010-06-10]
- EDISON ROBERTO CABRAL DA SILVA ET AL: "PWM Series Resonant DC-Link Converter with Current Clamping by the Use of Saturable Core" IEEE TRANSACTIONS ON POWER ELECTRONICS, IEEE SERVICE CENTER, PISCATAWAY, NJ, US, Bd. 14, Nr. 1, 1. Januar 1999 (1999-01-01) , XP011043258 ISSN: 0885-8993
- BROACH B ET AL: "A Constant-Frequency Method for Improving Light-Load Efficiency in Synchronous Buck Converters" IEEE POWER ELECTRONICS LETTERS, IEEE SERVICE CENTER, NEW YORK, NY, US LNKD- DOI:10.1109/LPEL.2005.845177, Bd. 3, Nr. 1, 1. März 2005 (2005-03-01), Seiten 24-29, XP011128778 ISSN: 1540-7985
- JOSHUA PHINNEY ET AL: "Filters With Active Tuning for Power Applications" IEEE TRANSACTIONS ON POWER ELECTRONICS, IEEE SERVICE CENTER, PISCATAWAY, NJ, US, Bd. 18, Nr. 2, 1. März 2003 (2003-03-01), XP011078322 ISSN: 0885-8993
- R. Balog, P. T. Krein, D. C. Hamill: "Coupled inductors - a basic filter building block" Electrical Manufacturing and Coil Winding Association Conf., Cinncinati OH, 2000 2002, XP002587347 Gefunden im Internet: URL:http://www.hamill.co.uk/pdfs/ciabfbb_. pdf [gefunden am 2010-06-16]
- "E16/8/5 E cores and accessories - Datasheet" Ferroxcube 1. September 2008 (2008-09-01), XP002587348 Gefunden im Internet: URL:http://www.ferroxcube.com/prod/assets/ e1685.pdf [gefunden am 2010-06-16]

## Beschreibung

Die Erfindung betrifft einen Gleichspannungsschaltwandler nach dem Oberbegriff des Anspruchs 1 und ein Gleichspannungsschaltwandlungsverfahren nach dem Oberbegriff des Anspruchs 15.

Gleichspannungsschaltwandler sind in verschiedensten Ausführungen bekannt und werden in vielfältigen Anwendungen eingesetzt. In einer Vielzahl von elektronischen Geräten werden Versorgungsspannungen mit unterschiedlichen Pegeln in einem Leistungsbereich von einigen mW bis etwa 500W benötigt. Beispielsweise wird oft zur Versorgung von Computer-Prozessoren eine Kernspannung von +1.8V oder +1.2V und eine oder mehrere Busspannungen von +5V, +3.3V oder +2.5V benötigt. Auch wird häufig zur Versorgung von Logikschaltungen +5V, +3.3V oder +2.5V verwendet, Analogschaltungen arbeiten jedoch mit +12V und -12V oder +16V und -16V, sodass oft auf derselben Printplatte eine Vielzahl von unterschiedlichen Versorgungsspannungen benötigt wird.

In vielen Fällen können diese nicht alle von extern bereitgestellt werden, da hierfür aufwendige Netzteile nötig wären oder dies den Verdrahtungsaufwand stark verkomplizieren würde. In einigen Fällen ist dies auch nicht möglich, da nur eine einzige Batterie- oder Akku-Spannung als Quelle zur Verfügung steht.

Insbesondere moderne Prozessoren oder FPGAs fordern bei geringen Kernspannungen oft enorme Ströme von einigen 10 Ampere, welche zudem noch, je nach Prozessorauslastung, starken Schwankungen unterworfen sind. Hier machen schon alleine die Widerstände und Induktivitäten der Zuleitungen einer externen Spannungsversorgung einen sicheren Betrieb schwierig oder unmöglich. Daher haben sich gerade in diesem Bereich so genannte Point-of-Load-Versorgungen etabliert, bei denen die lokalen Spannungen für einen Chip in direkter örtlicher Nähe zu diesem aus einer meist höheren, globalen Versorgungsspannung generiert werden, um die Verluste in den Zuleitungen zu vermeiden.

Aus diesen und anderen Gründen besteht vielfach die Forderung, eine Gleichspannung in eine andere Gleichspannung umzusetzen. Dies kann sowohl in Form einer Aufwärtswandlung von einer niedrigeren zu einer höheren Spannung, einer Abwärtswandlung von einer höheren zu einer niedrigeren Spannung, als auch dem Wandeln einer positiven zu einer negativen Spannung geschehen. Je nach Anwendung variieren die Spannungswerte am Eingang und Ausgang des DC-DC-Konverters von weniger als einem Volt bis hin zu einigen Kilovolt.

Oftmals besteht auch der Bedarf eine nicht konstante, variierende oder gar unbekannte Eingangsspannung in eine definierte Ausgangsspannung umzuwandeln. Es ist eine Wandlung nötig, bei der die Spannung von einer Schaltung sowohl Aufwärts wie auch Abwärts umgesetzt werden kann, wie beispielsweise ein SEPIC-Converter. Dabei sollten Störungen wie Spannungsschwankungen am Eingang, Lastsprünge am Ausgang oder ähnliches einen möglichst geringen Einfluss auf den Wert der Ausgangsspannung haben.

In anderen Fällen ist anstelle der konstanten Ausgangsspannung ein konstanter Ausgangsstrom gefordert. Mit diesem werden beispielsweise LED-Leuchten versorgt. Die Schaltungen hierzu sind nach analogen Prinzipien aufgebaut, jedoch wird statt der Ausgangsspannung der Ausgangsstrom konstant gehalten.

Aufgrund der in vielen Anwendungen immer stärker geforderten Miniaturisierung sollten die Spannungswandler eine möglichst kompakte Bauform aufweisen und möglichst wenig Platz auf der Elektronikplatine beanspruchen.

In Anbetracht der vielen batteriebetriebenen Geräte und der geforderten hohen Integrationsdichte sowie auch aus ökologischen Überlegungen sind immer höhere Wirkungsgrade der Wandlung gefordert. Einerseits kann somit die Energieeffizienz der Geräte gesteigert werden, andererseits sinkt mit den Verlusten auch die Abwärme und somit beispielsweise die Notwendigkeit für aufwendige Maßnahmen zur Abfuhr durch Kühlkörper oder Lüfter.

Diesen Anforderungen werden Schaltregler verschiedenster Topologien mit einem oder mehreren hoch entwickelten elektronischen Leistungsschaltern gerecht, da diese zumindest theoretisch verlustfrei arbeiten. Durch die stetige Weiterentwicklung der Feldeffekttransistoren, speziell des N-Kanal MOSFET, welche Leitwiderstände im Bereich weniger Milliohm oder darunter und Schaltzeiten im Nanosekundenbereich erzielen, sind verlustarme DC-DC-Wandler, in vielfältigen Topologien realisierbar. Das Funktionsprinzip beruht dabei generell auf einem getakteten Schaltelement und Speicherelementen, wie Kondensatoren und Schaltdrosseln, mittels welchen getaktet Energie vom Eingang zum Ausgang übertragen und dabei der Spannungspegel angepasst wird.

Die verwendeten Topologien sind unterschiedlich. Sie lassen sich grob in die vier Hauptkategorien BOOST, BUCK, BUCK-BOOST, INVERTER und einteilen, wobei die konkret verwendeten Bauteile und deren Anordnung variierbar sind.

Der Markt für Gleichspannungswandler ist dementsprechend vielfältig. Renommierte Hersteller wie Linear Technologies, Texas Instruments, Analog Devices, Allegro, National Semiconductors sind nur einige der Hersteller von speziell auf DC-DC-Wandlung zugeschnittenen Bausteinen. Die Produktpalette reicht vom multifunktionellen Universalbaustein mit einer hohen Integrationsdichte bis hin zu Spezialbausteinen für Extremanwendungen wie Hochspannungs- oder Hochstromanwendungen.

In modernen Ansteuerungen solcher Wandler, sorgen Regelkreise in vielfältiger Ausführung für einen konstanten Ausgangswert über den gesamten zulässigen Betriebsbereich des Konverters. Auch wird die Zerstörung der Schaltung bei Fehlerzuständen wie Überlast, Kurzschluss, Rückspeisung, Übertemperatur oder ähnlichem durch verschiedenste Überwachungsstrategien von Strömen und/oder Spannungen verhindert.

Ein allgemeiner Nachteil von Schaltreglern sind die durch die Schaltvorgänge bedingten Ripple-Effekte. Schaltregler erzeugen funktionsbedingte Schaltspitzen und verursachen dadurch hochfrequente Störungen, welche sowohl am Eingang als auch am Ausgang durch entsprechende Maßnahmen innerhalb eines tolerierbaren Rahmens gehalten werden müssen. Daher sind verschiedenste Filterstufen für den Ein- und Ausgang von Schaltreglern bekannt.

Weiters erfordern die, bei den schnellen Schaltvorgänge im Bereich von einigen hundert Kilohertz bis hin zu einigen Megahertz auftretenden, großen Spitzenbelastungen der verwendeten Bauelemente besondere Aufmerksamkeit bei deren Auslegung.

Es ist bekannt, dass insbesondere ein gutes Layout der Leiterplatte mit entsprechend niederohmigen, kurzen, gegen Störungen geschirmten Leiterbahnen einen beträchtlichen Einfluss auf die Verluste, Baugrösse und Regelgüte des gesamten Schaltreglers hat.

Viele der Bauteile zur Ansteuerung von Schaltwandlern verfügen über integrierte Schaltelemente, Schwingkreise, Messverstärker, etc. sodass nur mehr wenige externe Komponenten zum Aufbau eines Gleichspannungswandlers benötigt werden.

Beispielsweise bietet die Firma Linear Technologies mit der "µModule"-Serie solche Hochintegrierten BUCK-BOOST DC/DC Module an, wie beispielsweise den Baustein LTM4609, welcher zur Spannungswandlung nur noch wenige externe Komponenten benötigt. Laut Datenblatt ist mit diesem bei entsprechender Auslegung ein Spitzen-Wirkungsgrad von bis zu 98 % erzielbar. Allerdings nimmt dieser ausserhalb des optimalen Arbeitspunktes, insbesondere bei geringer Ausgangsleistung, deutlich ab.

Wirkungsgrade in dieser Größenordnung sind insbesondere durch das Zusammenspiel von ausgetüftelte Ansteuerungs- und Regelungsstrategien wie Current-Mode-Control, Continuous-Mode, Discontinuous-Mode Burst-Mode oder Skip-Cycle-Mode und einer sehr sorgsamen Auslegung aller beteiligten Komponenten für den jeweiligen Anwendungsfall möglich.

Etliche am Markt verfügbare Bausteine zur Ansteuerung sowie Schaltelemente sind bereits zu einem sehr hohen Grad auf Verlustleistungsminimierung getrimmt, wobei viele Informationen hierzu sich in den Datenblättern und Application-Notes der Hersteller finden lassen.

Die US 4 755 922 A zeigt einen verwandten Gleichspannungsschaltwandler.

Die US 2008/0290911 oder auch US 7 161 342 zeigten beispielsweise die Ansteuerung eines Schaltelements, bei welcher im Falle von niedrigen Ausgangslasten die Ansteuerspannung des Transistors reduziert wird, um ihn nur teilweise durchzuschalten und das Schaltverhalten durch die nur teilweise Entladung der Gatekapazität zu verbessern.

Die US 5 912 552 beschreibt eine verlustoptimierte Ansteuerung eines Schaltwandlers, bei welcher die Frequenz der Ansteuerung des Leitungsschalters entsprechend der Ausgangslast angepasst wird.

Die US 6 462 962 offenbart eine Möglichkeit zur Optimierung der Ansteuerung eines DC-DC-Converters durch ein spezielles Zeitverhalten bei der Ansteuerung der Schaltelemente.

Es lässt sich bei praktischen Aufbauten oft feststellen, das die Mehrzahl der Verluste nicht in den Halbleitern auftreten, sondern ein Grossteil der Leistung in den externen, diskreten Induktivitäten, Kapazitäten und Widerständen, welche zusätzlich benötigt werden, verloren geht. Diese Verluste müssen daher bei einer weiteren Optimierung von Schaltreglern speziell beachtet werden.

Die induktiven Bauelemente, welche als Schaltdrosseln Verwendung finden, haben in der Regel einen Magnetkern der eine Wicklung zumindest teilweise umschließt. Einerseits kann dadurch der geforderte Induktivitätswert des Bauelements bei kompakter Bauform erst erreicht werden, andererseits kann dieser Kern auch die auftretenden Streufelder bündeln und die EMV-Abstrahlung reduzieren. Zur Speicherung der Energie sind die induktiven Komponenten vielfach mit einem diskreten oder verteilten Luftspalt ausgestattet. Hierbei sind insbesondere das Zusammenspiel des Materials und der Geometrie des Kerns, sowie die Ausführung der Wicklung von Bedeutung, um die Verluste des Bauelements niedrig zu halten. Beispielsweise bietet die Firma WÜRTH, COILTRONICS, MURATA oder COILCRAFT verschiedenste Bauelemente an, welche speziell für den Einsatz in Schaltreglern ausgelegt sind.

Das Dokument US 6 656 813 zeigt eine Induktivität, welche auf Grund ihres Aufbaus niedrige Verluste und eine hohe Güte aufweist.

Ebenso ist in DE 199 959 732 eine spezielle Ausführung der Wicklung einer Induktivität dargestellt, welche sich durch einen hohen Füllfaktor auszeichnet und folglich in einer kompakten Baugröße realisiert werden kann.

Die Kapazitäten in Schaltregler müssen ebenfalls eine hohe Güte und geringe Verluste, insbesondere geringen ESR-Werten, aufweisen. Im Folgenden wird in der Anmeldung für diese Art von kapazitiven Bauelementen der Begriff "Vielschicht-Keramik-Kondensatoren" verwendet, da diese dem Fachmann geläufig sind und nach derzeitigem Stand der Technik die geforderten Kriterien in hohem Masse erfüllen und in kompakter SMD-Bauweise in vielfältiger Ausführung verfügbar sind. Es wird jedoch ausdrücklich darauf hingewiesen, dass dieser Begriff nur beispielhaft für die Anforderungen an die Kapazitäten dient, und selbstverständlich auch beliebige andere kapazitive Bauelemente, welche diese Anforderungen erfüllen oder übertreffen, damit eingeschlossen sind.

Solche Vielschicht-Keramik-Kondensatoren, wie Sie in den Katalogen der Hersteller wie beispielsweise der Firma EPCOS oder TAIYO YUDEN in verschiedensten Variationen zu finden sind, zeichnen sich durch hohe Kapazitätswerte bei kleiner Bauform und gleichzeitig geringen parasitäre Verluste aus. Jedoch zeigen diese Bauelemente ein Verhalten, bei welchem der Kapazitätswert bei einer Erhöhung der DC-BIAS Spannung, wie diese in Schaltreglern vorherrscht, deutlich sinkt. Auch erreicht die Bauteilimpedanz ihr Minimum erst bei Frequenzen, welche deutlich über einem Megahertz liegen und daher kann dieser optimale Arbeitspunkt mit den heute in Schaltreglern üblichen Ansteuerungsfrequenzen nicht erreicht werden. Eine Modellierung des Frequenzganges der Bauteilimpedanz ist mit dem allgemein gebräuchlichen Eratzschaltbilds einer Kapazität möglich. Auch ist diese Resonanzfrequenz von externen Faktoren, im speziellen auch von der DC-Bias-Spannung abhängig.

Insbesondere im Bereich von Wirkungsgraden im Bereich von 99% und darüber sind auch die vielfach vorgeschriebenen Sicherungen und Massnahmen zum Verpolungsschutz nicht mehr zu vernachlässigen. Es wird auch in diesen Bereichen versucht, die Verluste und den Platzbedarf so gering als möglich zu halten. Beispielsweise durch den Ersatz von klassischen Schmelzsicherungen durch Sicherungen in SMD-Bauweise mit Leitwiderständen im Bereich von einigen Milliohm.

Die Offenbarung DE 100 13 939 zeigt einen aktiven Verpolungsschutz welcher sich durch geringere Verluste im Vergleich zu dem zuvor häufig verwendeten Verpolungsschutz mittels Dioden auszeichnet. Jedoch speziell bei niedrigen Eingangsspannungen im Bereich von wenigen Volt, wie dies beispielsweise oft bei batteriebetriebenen Geräten üblich ist, besteht durch die beschränkte Ansteuerspannung die Gefahr, dass der Transistor nicht voll durchschalten kann. Gerade jedoch bei batteriebetriebenen Geräten besteht aber eine grosse Gefahren einer Verpolung der Versorgungsspannung aufgrund falsch eingelegter Batterien durch einen unachtsamen Benutzer. Zudem wird zu dessen Aufbau eine Vielzahl von Bauelementen benötigt, was auch Platz auf der Printplatte in Anspruch nimmt.

Es werden in der Anmeldung verschiedene Ansätze offenbart, wie die Verluste in den Peripheriebaugruppen reduziert werden können, welche auch für sich als eigenständige Erfindungen sind. Insbesondere aber deren Kombination ermöglicht eine deutliche Reduktion der Verluste des Schaltreglers.

Wie bereits zuvor erwähnt, müssen zur Erreichung eines hohen Wirkungsgrades, insbesondere von über 99%, nicht nur die Schaltelemente und deren Ansteuerung sondern auch die Peripherieelemente in höchstem Masse bei der Optimierung mitberücksichtigt werden.

Der Markt fordert nach immer höher werdenden Integrationsdichten und somit auch nach immer kompakteren Spannungswandlern.

Eine Aufgabe dieser Erfindung ist die Verbesserung eines Gleichspannungsschaltwandlers.

Es ist daher eine Aufgabe dieser Erfindung die Anzahl der benötigten Komponenten - insbesondere rund um den Ansteuerungs-IC - zu reduzieren sowie deren Größe zu miniaturisieren.

Dabei ist auch die Reduktion der Verlustleistung und die Vermeidung der damit verbundenen thermischen Probleme - in anderen Worten eine Verbesserung des Wirkungsgrades - eine weitere Aufgabe dieser Erfindung.

Eine weitere Aufgabe ist es, dies möglichst ohne Verwendung aufwändiger und teurer Sonderbauelemente, sondern auch mit Standardkomponenten in einem höchstmöglichen Masse zu realisieren.

Der Schaltregler muss dabei Grossindustriell herstellbar sein, was somit ein weiterer Teil der Aufgabe ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Der erfindungsgemässe Schaltregler erreicht dies durch eine energetische Entkopplung des Eingangs und einer Vielzahl von Optimierungen an den peripheren Bauelementen des Schaltreglers, wie Filtern, kapazitiven und induktiven Komponenten, sowie insbesondere durch deren Kombination.

Der Schaltwandler kann in verschiedensten Topologien und mit einer Ansteuerung von unterschiedlichsten Herstellern mit internen oder externen Schaltelementen realisiert werden. In besonderem Masse sind jedoch Bauteile von Bedeutung, welche speziell auf eine Wirkungsgradoptimierung hin ausgelegt sind, beispielsweise indem sie unterschiedliche Ansteuerungsmodi, wie Burst, Continuous, Discontinuous, Skip-cycle, etc. aufweisen und speziell auf dieses Kriterium hin entwickelt wurden. Jedoch lassen sich die vorteilhaften Wirkungen der Erfindung auch bei Standard-Schaltreglern nutzen.

Bei einem Schaltwandler, insbesondere bei Einsatz eines verlustoptimierten Bausteins zur Ansteuerung, tritt ein Grossteil der Verluste in den peripheren Bauteilen auf, insbesondere in der induktiven Komponente und den Filter- und Stützkapazitäten.

In den Design-Notes der Hersteller findet sich daher meist der Hinweis bei den Eingangskapazitäten Typen zu wählen, welche einen niedrigen ESR-Wert aufweisen und diese in unmittelbarer Nähe des Schaltreglers zu platzieren, um die Schaltspitzen abdecken und die Spannungen glätten zu können. Meist wird auch das Parallelschalten von kleineren Kondensatoren, insbesondere von Vielschicht-Keramik-Kondensatoren niedriger Kapazität, empfohlen. Durch eine Parallelschaltung mehrerer kleinerer Kapazitäten lässt sich eine Reduktion des ESR-Wertes und somit eine verbesserte Güte im Gegensatz zu einem einzelnen grossen Kondensator mit demselben Kapazitätswert erzielen. Durch die hohe Güte können die Schaltspitzen entsprechend abgefangen und die Störaussendung reduziert werden.

Da die Vielschicht-Keramik-Kondensatoren aufgrund ihrer relativ geringen Kapazität jedoch nur eine sehr beschränkte Menge an Energie speichern können, sind zusätzlich noch größere Kondensatoren, beispielsweise Elektrolyt oder Tantal-Kondensatoren, im Ein- und Ausgang nötig, in welchen der Grossteil der Energie gespeichert ist. Diese besitzen jedoch den Nachteil einer geringeren Güte und tragen deshalb, insbesondere bei der in Schaltreglern auftretenden Wechselstrombelastung nicht unwesentlich zu den Verlusten bei.

Es ist daher wünschenswert diese Wechselverluste so weit als möglich zu reduzieren. Diese Aufgabe wird erfindungsgemäß durch eine energetische Entkopplung des Elektrolytkondensators erreicht, bei welcher der Wechselanteil des Energieflusses reduziert bzw. komplett unterdrückt wird. Die bekannten Filter sind im Gegensatz dazu rein auf Störunterdrückung ausgelegt. Hierzu wird ein aus der Funktechnik als n-Filter oder PI-Filter bekanntes Glied zwischen den Elektrolytkondensator und den Schaltwandler eingebracht. Dieses Filter wird so dimensioniert, dass es bei der Schaltfrequenz zumindest die dreifache, besser jedoch die zehnfache Impedanz der Kapazität aufweist, und somit den hochfrequenten Energiefluss im Elektrolytkondensator drastisch reduziert und gleichzeitig auch als EMV-Filter wirkt.

Bei der Wahl der Komponenten dieses Filters ist besonders darauf zu achten, dass diese eine hohe Güte und geringe Verluste aufweisen. Wie bereits erläutert eignen sich hierfür vorzugsweise Vielschicht-Keramik-Kondensatoren, wie beispielsweise die EMK, UMK oder TMK- Serie der Firma TAIYO YUDEN, oder ähnliche. Bei der Auslegung dieser Filterkondensatoren ist auch der Rückgang des Kapazitätswertes bei einer anliegenden DC-Biasspannung mit zu berücksichtigen, beispielsweise indem der Spannungs- oder Kapazitätswert entsprechend überdimensioniert wird.

Bei der induktiven Komponente des Filters, im Weiteren kurz als Filterdrossel bezeichnet, ist ebenfalls auf eine möglichst hohe Güte und geringe Verluste zu achten. Dies kann einerseits dadurch erreicht werden, indem die Kupferverluste der Wicklung durch Reduktion der Windungszahl, Optimierung des Füllfaktors und Auswahl eines geeigneten Kerns erreicht werden. Die in solchen Filtern bekannten Standard-SMD-Ferrite, auch unter dem Begriff "magnetic beads" bekannt, sind aufgrund ihrer unzureichenden Güte und den somit hohen Verlusten für ein wirkungsgradoptimiertes Design ungeeignet.

Vorzugsweise ist die Wicklung in Form einer Flachdraht- oder HF-Litze-Wicklung ausgeführt. Durch Wahl eines entsprechend großen Querschnittes des Wicklungsdrahtes können die I^2R-Verluste klein gehalten werden. Insbesondere die Verwendung eines Drahtes mit rechteckigem Querschnitt, welcher entlang seiner hohen Kante um den Kern gewickelten ist, bietet hier auch Vorteile bezüglich des Proximity- und Skineffekts.

Um trotz einer geringen Windungszahl dennoch eine genügend hohe Induktivität, beispielsweise 5uH zu erreichen, ist ein Kern der Spule aus einem geeigneten Magnetmaterial erforderlich. Bei der Auswahl ist insbesondere auf den Temperaturverlauf der Verluste zu achten, welcher bei manchen Ferriten sein Minimum erst bei 100°C oder 140°C erreicht. Beispielsweise weist das Ferrit 3C95 der Firma Ferroxcube bei üblichen Betriebstemperaturen im Bereich von 20-40°C niedrige Verluste auf.

Durch eine solche Dimensionierung wird die Ripple-Belastung am Eingang und somit auch die Verluste in den Kapazitäten deutlich verringert.

Die induktive Komponente im Schaltregler - weiters kurz als Schaltdrossel bezeichnet - ist eine weitere Komponente, welche einen massgeblichen Anteil an den Verlusten verursacht.

Auch bei dieser ist eine Verlustoptimierung nach den bei der Filterdrossel erläuterten Grundsätzen durchzuführen. Der bei Nennbetrieb auftretende Spitzenstrom in der induktiven Komponente ruft eine maximale magnetische Feldstärke hervor. Der flussführende, magnetisch aktive Querschnitt des Kernbutzen, welcher innerhalb der Wicklung liegt, wird so gewählt, dass diese maximale Feldstärke zumindest etwa 85% bis 95%, insbesondere 90%, der magnetischen Sättigungsfeldstärke des Ferrit-Materials entspricht.

Im äusseren Rückschluss wird der Querschnitt deutlich grösser gewählt, beispielsweise etwa um Faktor 2 oder mehr. Somit tritt der Grossteil der Verluste innerhalb des relativ kleinen Volumens des Kernbutzens auf.

Zusätzlich bewirkt eine Erhöhung der Temperatur durch den Betrieb oder durch die Umgebung eine Reduktion des Wertes der magnetischen Sättigung, wie dies beispielsweise aus dem Datenblatt des erwähnten 3C95-Ferrits ersichtlich ist. Dadurch wird die Sättigung bereits bei geringeren Strömen erreicht, mit welcher auch eine Reduktion des Induktivitätswertes der induktiven Komponente einhergeht. Dies wiederum bewirkt einen schnelleren-Anstieg des Stromes in der Schaltdrossel. Dieser wird von der Ansteuerung als über dem Limit liegend erfasst, welche dann ein Ausschalten des Schaltelementes zur Verhinderung eines weiteren Anstiegs des Stromes auslöst. Somit wird bei steigender Temperatur die maximal zulässige Ausgangsleistung reduziert, und die Schaltung vor Zerstörung durch Überlastung geschützt.

Das Prinzip der Sättigung bewirkt weiters, dass auch bei einer Überlastung, beispielsweise in Folge eines Kurzschlusses, die magnetische Sättigung durch den erhöhten Strom erreicht wird. Dieser Strom steigt durch den bei magnetischer Sättigung reduzierten Induktivitätswert im Verhältnis zum Normalbetrieb deutlich stärker an. Die Ansteuerung veranlasst, wie schon zuvor beschrieben, in diesem Überstromfall die Abschaltung des Schaltelements innerhalb sehr kurzer Zeit, sodass die Strom-Zeit-Fläche und somit die Energie dieser Stromüberhöhung gering bleibt. Somit trägt die vom Fachmann üblicherweise als negativ angesehene magnetische Sättigung vorteilhaft zur Strombegrenzung bei.

Durch die Konzentration der Verluste auf den Kernbutzen, kann der Teil des Kerns, welcher als magnetischer Rückschluss dient aufgrund seiner geringen Verluste als Kühlkörper für andere Elemente, beispielsweise für die Ansteuerung und/oder das Schaltelement, Verwendung finden.

Die Schaltdrossel kann neben den üblichen zwei Anschlüssen noch weitere Anzapfungen zur Erzeugung unterschiedlicher Spannungen aufweisen. Diese werden, neben anderen Anwendungen, beispielsweise zur internen Versorgung der Ansteuerung oder zumindest von Teilen dieser verwendet. Ein vielfach in der Ansteuerung enthaltener verlustbehafteter Linearregler, zur Bereitstellung eine innerhalb der Ansteuerung benötigte Versorgungsspannung, wird auf diese Weise im Betrieb entlastet oder kann komplett deaktiviert bzw. weggelassen werden. Insbesondere können diese zusätzlichen Spannungen auch vorteilhaft als Ansteuerspannung zur Ansteuerung der Schaltelemente Verwendung finden.

Um die Baugrösse der Schaltdrossel weiter zu reduzieren, kann mittels eines permanentmagnetischen Materials ein Offset des magnetischen Flusses in den Kern eingebracht werden. Diese magnetische Vorspannung des Ferritmaterials, beispielsweise auf -80% der magnetischen Sättigung, erlaubt die Ausnutzung sowohl der oberen als auch der unteren Halbebene der Sättigungskennlinie. Im Beispiel einer Vorspannung von -80% der Sättigung liegt dadurch der DC-Sättigungsstrom bei 180% des Sättigungsstromes einer Induktivität ohne Permanentmagnet.

Durch eine Optimierung des Verhältnisses der Ansteuerleistung des Schaltelementes gegenüber seiner Schaltverluste, lässt sich, insbesondere bei niedriger Ausgangsleistung, der Wirkungsgrad des Konverters weiter steigern. Je nach dem in der Anwendung zu erwartenden Lastspiel kann dies entweder einmalig bei der Auslegung fixiert, oder entsprechend der Ausgangslast variiert werden. Beim Variieren der Ansteuerspannung oder des Ansteuerstromes des Schaltelements bietet sich neben einer kontinuierlichen Anpassung auch der Wechsel zwischen zwei oder drei fixen Werten entsprechend der aktuellen Ausgangslast an, beispielsweise in den drei Stufen "Standby" - "Operation" "High Load" mit jeweils steigenden Ansteuerungsspannungen von +4.1V, +5.4V oder +6.3V. Es ist jedoch darauf zu achten, dass die Ansteuerspannung des Schaltelements in jedem Falle über der Threshold-Spannung des Schaltelements liegt, um dennoch ein volles Durchschalten zu gewährleisten.

Um den Wirkungsgrad nochmals zu steigern und die Verluste in den kapazitiven Bauelementen weiter zu reduzieren, werden diese an ihrem optimalen Arbeitspunkt im Frequenzbereich - somit bei oder nahe ihrer internen Resonanzfrequenz - betrieben. Bei dieser Frequenz weist das Bauelement eine minimale Impedanz und somit auch minimale Verluste auf. Da die Eigenresonanz bei Kapazitäten, insbesondere bei Vielschicht-Keramik-Kondensatoren, in einem Bereich von etlichen Megahertz liegt, und bei Schaltfrequenzen des Schaltreglers in diesem Bereich die Schaltverluste überproportional steigen würden, wird die Eigenresonanzfrequenz der Kapazität erfindungsgemäss reduziert. Dies geschieht durch Verstärkung der parasitären Induktivität des Kondensators, indem dieser mit einem magnetisch leitfähigen Kern, beispielsweise in Form eines um einen SMD-Vielschicht-Keramik-Kondensator angebrachten Ringkerns aus Ferrit.

Dieser Kern kann einen Luftspalt aufweisen und beispielsweise aus Ferrit hergestellt sein. Durch ihn lässt sich die Eigenresonanzfrequenz des im allgemeinen Ersatzschaltbild eines Kondensators dargestellten Serienschwingkreises reduzieren. Das somit entstandene Bauelement - kurz als Resonanzfilter bezeichnet - kann in seiner Resonanzfrequenz auf die Frequenz der Ansteuerung und/oder deren Harmonische angepasst werden, insbesondere können auch mehrere Resonanzfilter zum Filtern von einer oder unterschiedlichen Frequenzen verwendet werden.

Bei einer weiteren Optimierung werden zwei oder mehr Resonanzfilter durch den magnetischen Kern miteinander magnetisch gekoppelt. Zur Veranschaulichung der Wirkungsweise lässt sich dies im klassischen Ersatzschaltbild eines Kondensators durch eine "Trafo-Kopplung" der parasitären Induktivitäten darstellen.

Einerseits kann somit die Resonanzfrequenz weiter reduziert werden, andererseits können durch unterschiedliche Luftspalte mehrere, auch unterschiedliche Resonanzen überlagert werden, um beispielsweise ausgewählte Frequenzen, wie die Ansteuerfrequenz und/oder deren Harmonische zu unterdrücken, oder den Frequenzbereich in welchem Resonanz auftritt zu verbreitern.

Um ein Verstimmen des Resonanzfilters durch die starke Anhängigkeit des Kapazitätswertes von der Bias-Spannung in Folge nicht konstanter Eingansspannung zu vermeiden, wird in einer vorteilhaften Ausführung die Schaltfrequenz proportional zu der am Eingang anliegenden Spannung angepasst.

Selbstverständlich können die beschriebenen PI-, Resonanz- und gekoppelten Resonanz-Filter sowohl im Eingang als auch im Ausgang Verwendung finden.

Bei entsprechender Anwendung und Dimensionierung der erfindungsgemässen Filter kann der zuvor im Eingang oder Ausgang benötigter Elektrolytkondensator entsprechend kleiner dimensioniert werden bzw. in manchen Fällen sogar ganz entfallen oder zumindest durch einen kleineren Vielschicht-Keramik-Kondensator ersetzt werden.

Sehr häufig arbeiten die Ansteuerungen im so genannten "current mode", bei welchem der Strom in der induktiven Komponente anhand einer proportionalen Spannung, welche an einem Shunt-Widerstand abfällt, bestimmt wird. Um die zusätzlichen Verluste, welche durch explizite ShuntWiderstände entstehen zu vermeiden, ist die Verwendung des Leitwiderstandes des Schaltelementes, insbesondere des RDS-ON eines MOSFETs, bekannt.

Dadurch ergeben sich jedoch auch eine Reihe von Nachteilen, da bedingt durch die Messung an einem schaltenden Element eine Vielzahl von Störungen und Nichtlinearitäten auftreten, welche zu unterdrücken sind und auch der Zeitpunkt der Messung entsprechend gewählt werden muss, um korrekte Ergebnisse zu erhalten.

Bei einer Strommessung entsprechend der vorliegenden Erfindung werden zur Strommessung ebenfalls parasitäre Widerstände verwendet, um den Wirkungsgrad zu verbessern. Jedoch wird hierzu nicht das Schaltelement des Wandlers, sondern der Leitwiderstand der Sicherung und/oder des Verpolungsschutzes verwendet. Auf diese Weise kann eine Strommessung ohne explizite Shuntwiderstände erfolgen, ohne gleichzeitig die Nachteile bei Verwendung des Schaltelements zu haben. Zum Schutz der Ansteuerung können hierbei noch Schutzdioden an den Strommesseingängen von notwendig sein.

Durch die erfindungsgemässen Optimierungen eines Schaltreglers, insbesondere durch eine Kombination des offenbarten PI-Filters, der Resonanzfilter, des gekoppelten Resonanzfilters, der entsprechend ausgelegten Schaltdrossel mit oder ohne magnetischer Vorspannung, der Sicherung und des Verpolungsschutzes, der Strommessung, der angepassten Ansteuerspannung der Schaltelemente, einer entsprechenden Wahl der Ansteuerung und einem guten Design des Platinenlayouts wird ein Wirkungsgrad von mehr als 99%, insbesondere bis zu 99,75% oder höher, erreicht. Ein entsprechend ausgelegter Schaltwandler kann diesen Wirkungsgrad über einen weiten Ausgangsleistungsbereich, beispielsweise von 5% bis 100% seiner Nennleistung, annähernd konstant erreichen. Zudem wird durch die Reduktion und Miniaturisierung der benötigten Bauelemente die Baugrösse reduziert.

Das erfindungsgemäße Verfahren und die erfindungsgemäße Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
Fig. 1 eine erste erfindungsgemässe Ausführungsform eines Gleichspannungsschaltwandlers als Elektronik-Schema;
Fig. 2 eine zweite erfindungsgemässe Ausführungsform eines Gleichspannungsschaltwandlers als Elektronik-Schema;
Fig. 3 eine dritte erfindungsgemässe Ausführungsform eines Gleichspannungsschaltwandlers als Elektronik-Schema;
Fig. 4 eine vierte erfindungsgemässe Ausführungsform eines Gleichspannungsschaltwandlers als Elektronik-Schema;
Fig. 5a eine schematische 3D-Darstellung einer erfindungsgemässen Ausführungsform eines erfindungsgemäßen Resonanzfilters mit einer Kapazität mit magnetisch leitfähiger Ummantelung;
Fig. 5b eine Darstellung zur Erläuterung der erfindungsgemässen Funktionsweise eines Resonanzfilters aus Fig. 5a anhand des allgemeinen Ersatzschaltbildes von Kondensatoren;
Fig. 5c eine Schnitt-Darstellung einer erfindungsgemässen Ausführungsform eines sich auf einer Printplatte befindlichen, erfindungsgemässen Resonanzfilters mit Luftspalt;
Fig. 5d eine Schnitt-Darstellung einer alternativen erfindungsgemässen Ausführungsform eines sich auf einer Printplatte befindlichen, erfindungsgemässen Resonanzfilters;
Fig. 6a eine schematische Darstellung einer Ausführungsform eines erfindungsgemäßen Filters mit zwei durch magnetisch leitfähiger Ummantelung gekoppelten Kondensatoren;
Fig. 6b eine Darstellung zur Erläuterung der erfindungsgemässen Funktionsweise eines gekoppelten Resonanzfilters aus Fig. 5a anhand des allgemeinen Ersatzschaltbildes von Kondensatoren;
Fig. 6c eine Schnitt-Darstellung einer erfindungsgemässen Ausführungsform eines sich auf einer Printplatte befindlichen, erfindungsgemässen gekoppelten Resonanzfilters mit einem Luftspalt;
Fig. 6d eine Schnitt-Darstellung einer alternativen erfindungsgemässen Ausführungsform eines sich auf einer Printplatte befindlichen, erfindungsgemässen gekoppelten Resonanzfilters mit mehreren Luftspalten;
Fig. 7 eine Darstellung von Ersatzschaltbilder der verschiedenen erfindungsgemässen Filter-Varianten im Vergleich;
Fig. 8 eine Darstellung von Frequenzgängen der verschiedenen erfindungsgemässen Filter-Varianten im Vergleich;
Fig. 9a eine schematische Darstellung einer erfindungsgemässen Ausführungsform einer induktiven Komponente der vorliegenden Erfindung;
Fig. 9b eine beispielhafte erfindungsgemässen Ausführungsform einer induktiven Komponente als Schnittdarstellung;

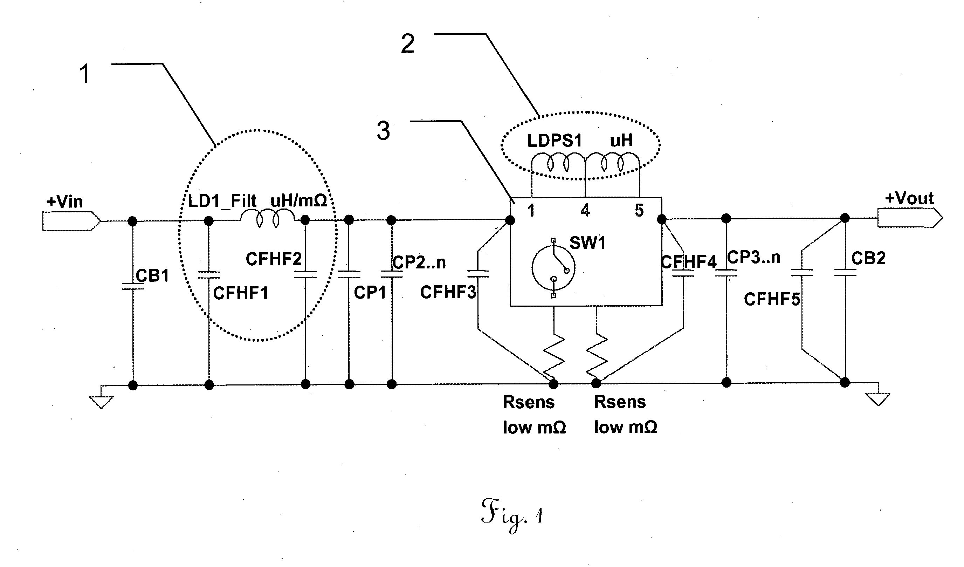

Figur 1 zeigt ein Elektroschema einer erfindungsgemässen Ausführungsform des Schaltwandlers, mit einem Eingang +Vin, an welchem eine Eingangsspannung gelegt wird und einem Ausgang +Vout an welchem eine gewünschte Ausgangsspannung anliegt. Die Ansteuerung und das Schaltelement SW1 sind dabei symbolisch als Block 3 dargestellt, um den verschiedensten Schaltreglertopologien Rechnung zu tragen bei welchen die erfindungsgemässen Lösungen anwendbar sind.

Es ist ein Gleichspannungsschaltwandler als Aufwärtswandler, Abwärtswandler, Inverswandler oder Aufwärts- und Abwärtswandler, insbesondere SEPIC-Wandler, mit
▪ einem Eingang,
▪ einem Filter,
▪ einer induktiven Komponente als Schaltdrossel,
▪ einem Schaltelement, insbesondere einem FeldeffektTransistor, welches durch eine Ansteuerung geschaltet wird,
▪ einem Ausgang,
dargestellt, welcher dadurch gekennzeichnet ist, dass der Filter ein PI-Filter ist, welcher bei der Frequenz der Ansteuerung und/oder dessen harmonischen Oberschwingungen, insbesondere im Bereich von 100kHz bis 1MHz, den Eingang von der Schaltdrossel und dem Schaltelement energetisch entkoppelt, und zumindest eine induktive Komponente als Filterdrossel und zwei Kapazitäten, insbesondere Vielschicht-Keramik-Kondensatoren, aufweist.

In dieser Ausführung ist der erfindungsgemässe modifizierte PI-Filter 1 dargestellt. Der Filter befindet sich zwischen einer Eingangskapazität in Form eines Elektrolytkondensators CB1 mit grossem Kapazitätswert und den Stützkondensatoren CP1..n, welche in dieser Ausführung eine Parallelschaltung von bis zu n Stück Vielschicht-Keramik-Kondensatoren symbolisieren. Die Kondensatoren CP1..n sind derart gewählt, dass sie eine hohe Güte aufweisen. Durch Sie wird der hochfrequente Anteil des Schaltsignals vorgefiltert, sodass am PI-Filter 1 eine in grober Näherung sinusförmige Spannung anliegt, welche dieselbe Grundfrequenz wie die Ansteuerung des Schaltelements SW1 hat.

Die Aufgabe des PI-Filters 1 ist dabei primär nicht die Unterdrückung von hochfrequenten Störungen im Eingang wie dies der Stand der Technik fordert, sondern eine Leistungsmässige Entkopplung des Kondensators CB1 vom Schaltenden Element des Schaltreglers, wodurch die Verluste reduziert werden.

Die Werte der Bauelemente des Filters werden dabei derart gewählt, dass der Filter bei der Schaltfrequenz des Wandlers eine zumindest dreimal höhere Impedanz als der Kondensator CB1 aufweist, vorzugsweise ist die Impedanz mehr als zehnmal grösser. Bei niedrigen Frequenzen, insbesondere im DC-Bereich, ist die Filterimpedanz annähernd Null.

Die dabei verwendeten Bauteile zeichnen sich durch geringe Verluste aus. Die Kondensatoren CFHF1 und CFHF2 werden daher vorteilhaft in Form von Vielschicht-Keramik-Kondensatoren ausgeführt.

Die induktive Komponente, im Weiteren auch als Filterdrossel bezeichnet, zeichnet sich ebenfalls durch geringe Verluste aus. Die zur Filterung von Störungen bekannten SMD-Ferrite - oft als "magnetic beads" bezeichnet - sind aufgrund ihrer generell schlechten Güte hierfür ungeeignet. Wie bereits beschrieben ist speziell darauf zu achten, dass die induktive Komponente geringe Ohmsche Verluste aufweist, indem sie wenige Windungen mit einem grossen Querschnitt und einen hohen Füllfaktor von bspw. 80% hat. Der grosse Querschnitt bezieht sich auf den stromführenden Querschnitt, welcher beispielsweise durch Skin- oder Proximity-Effekt vom tatsächlichen Leiterquerschnitt des Wicklungsmaterials abweichen kann. Um den gewünschten Induktivitätswert erreichen zu können und die Störaussendung zu reduzieren, ist in vielen Fällen ein Ferritkern, insbesondere mit Luftspalt vorteilhaft. Um die Verluste gering zu halten, ist dabei ein diskreter Luftspalt einem verteilten vorzuziehen.

Durch die energiemässige Entkopplung sinkt die Ripple-Belastung in der Eingangskapazität CB1 und somit auch die Verlustleistung. Bedingt durch die deutlich höhere Güte des Filters im Vergleich zur Eingangskapazität CB1 sinken somit auch die Gesamtverluste. Der Kondensator CB1 kann daher einen niedrigeren Kapazitätswert und folglich auch eine geringere Baugrösse aufweisen. Ein dadurch eventuell erhöhte Welligkeit der Spannung an den Kondensatoren CP1..n kann hierbei in Kauf genommen werden, da dies bei entsprechender Dimensionierung und Regelung keine störenden Einflüsse auf die Spannung am Ausgang hat.

Die induktive Komponente 2 des Schaltreglers, im Weiteren kurz als Schaltdrossel oder LDPS1 bezeichnet, ist ein weiterer Ansatzpunkt zu Reduktion der Verluste und der Baugrösse. Wie zuvor beschrieben wird dies einerseits durch eine verlustoptimierte Wicklung erreicht, andererseits sind auch die Wahl des Kernmaterials sowie die geometrische Dimensionierung des Kerns von Bedeutung.

Bei der Wahl des Kernmaterials ist darauf zu achten, dass dieses einen Temperaturverlauf der Verluste aufweist, dessen Optimum im Bereich der üblichen Betriebstemperatur liegt, beispielsweise im Bereich von 15-40°C. Durch ein Abfallen der Verluste hin zu höheren Temperaturen kann auch eine teilweise "Selbstheilung" bei Überlastung realisiert werden, indem entsprechend einer Temperaturerhöhung durch Verluste, die Verluste gleichzeitig sinken.

Durch die Dimensionierung des Kernbutzens im Inneren der Wicklung, wird das verlustbehaftete Volumen des Kerns deutlich reduziert, sodass bei dem im Betrieb auftretenden Spitzenstrom in der induktiven Komponente die Sättigungsflussdichte des Ferrits beinahe erreicht wird, beispielsweise zu 80% oder 90% oder mehr.

Weiters kann die in Folge des Sättigungseffektes auftretende Verringerung des Induktivitätswertes vorteilhaft für eine Strombegrenzung ausgenutzt werden. Die Stromstärke in der Wicklung steigt bei Sättigung aufgrund der Induktivitätsverringerung immer stärker an. Dieser Strom wird von der Ansteuerung überwacht und diese schaltet bei Erreichen eines Stromlimits das Schaltelement ab, um einen weiteren Stromanstieg über das Limit zu verhindern. Da dieser Vorgang sehr rasch geschieht, ist die dabei auftretende Energie, in Form der Strom-Zeit-Fläche, sehr gering. Der starke Stromanstieg bei Sättigung führt somit zu einem sicheren, definierten Abschalten und schützt somit sicher vor Überlast.

Ein weiterer Vorteil ist, dass bei steigender Temperatur die Sättigungsflussdichte sinkt. Somit wird bei Erwärmung der Schaltung durch den Betreib oder externe Einflüsse die Sättigung früher erreicht, wodurch die Strombegrenzung bereits bei niedrigerem Effektivwert des Stromes einsetzt, und der Schaltregler somit vor weiterer Überlastung geschützt wird.

Der Querschnitt des magnetischen Rückschlusses des Kerns der Schaltdrossel wird, im Gegensatz zum Kernbutzen, deutlich unterhalb der Sättigungsflussdichte ausgelegt, beispielsweise auf 55% der Sättigungsflussdichte oder weniger. Somit weist dieser Teil des Kerns auch nur sehr geringe Verluste auf, beispielsweise nur mehr 20% der Verluste.

In einer vorteilhaften Ausführung kann der Kern der Schaltdrossel auch als Kühlkörper für andere Bauelemente, beispielsweise die Ansteuerung und/oder das Schaltelement, dienen, wodurch die Kompaktheit des DC-DC-Wandlers weiters verbessert wird.

Die dargestellte Variante zeigt zusätzlich einen dritten Anschluss der Schaltdrossel, welcher mit dem Anschluss 4 der Ansteuerung verbunden ist. Dieser dient zur Versorgung der Absteuerung oder von Teilen davon. Somit kann im Betrieb ein meist in der Ansteuerung integrierter verlustreicher Linearregler, welcher die Ansteuerung versorgt, entlastet oder gar deaktiviert werden.

Insbesondere kann der zusätzliche Anschluss der Schaltdrossel zur Erzeugung der Ansteuerspannung für das Schaltelement verwendet werden. Zur weiteren Verlustleitungsoptimierung sollte bei der Wahl dieser Ansteuerungsspannung auf ein optimales Verhältnis von Ansteuerleistung zu Schaltverlusten geachtet werden.

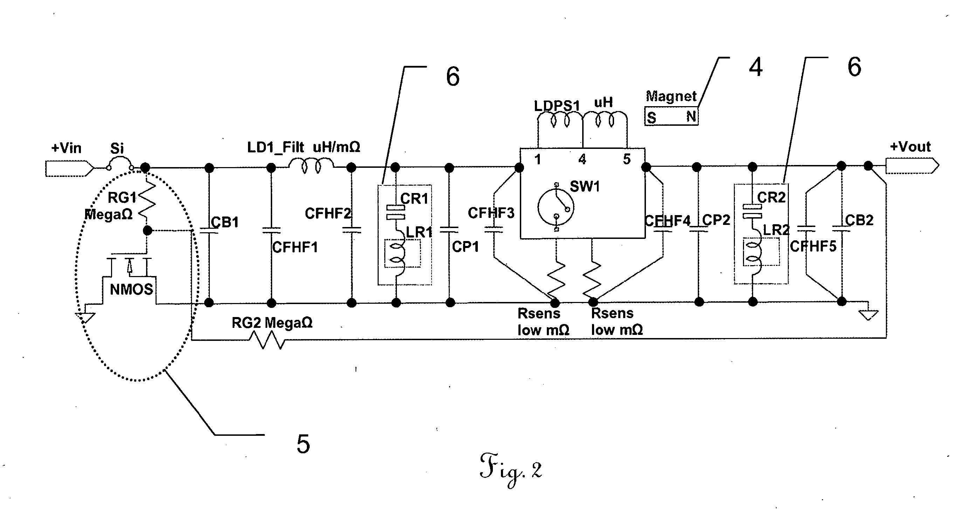

Figur 2 zeigt ein Elektroschema einer zweiten erfindungsgemässen Ausführungsform des Schaltwandlers. Diese verbessert nochmals, aufbauend auf dem Schaltregler der Ausführungsform von Figur 1, durch weitere Massnahmen den Wirkungsgrad.

Der Kern der Schaltdrossel ist nun zusätzlich mittels eines hartmagnetischen Werkstoffs, der in den Kern eingebracht wird, magnetisch vorgespannt. Durch das Magnetfeld dieses Permanentmagneten 4, welches entgegengesetzt zu dem Feld des Spulenstromes wirkt, wird der Arbeitspunkt im B-H-Diagramm der magnetischen Sättigungskurve in die untere Halbebene verlegt, indem nun in stromlosen Zustand eine negative Feldstärke herrscht. Wird hierbei beispielsweise auf 80% des negativen Sättigungswertes vorgespannt, so wird die positive Sättigung erst bei 180% des Stromes einer nicht vorgespannten Induktivität erreicht. Somit kann der Kern bei unidirektionaler Belastung deutlich kleiner dimensioniert werden, ohne dabei in Sättigung zu geraten.

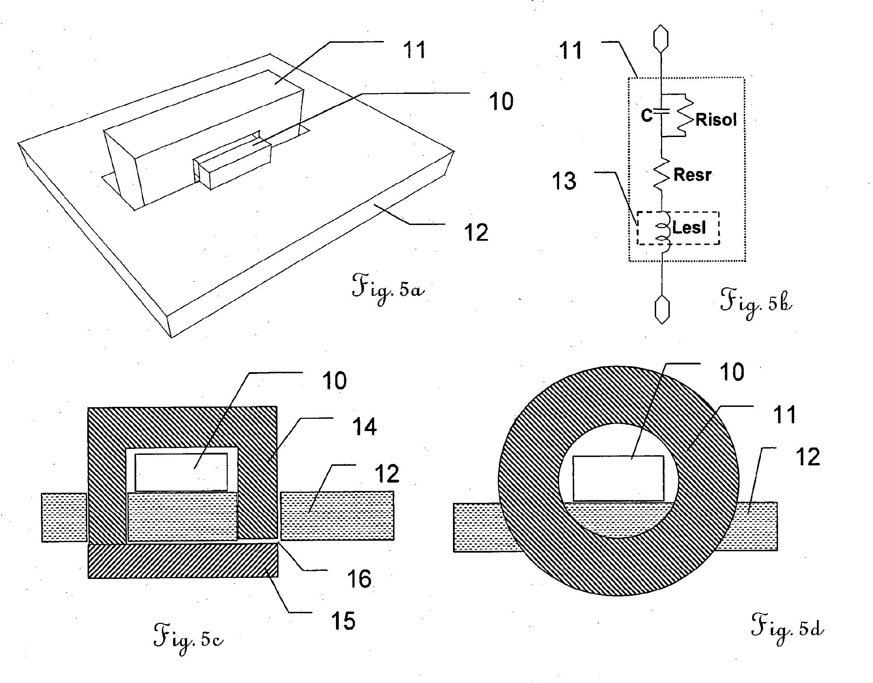

Weiters wurde ein Filter zweiter Bauart, im Weiteren kurz als Resonanzfilter 6 bezeichnet, in den Ein- und Ausgang eingefügt. Dieses Resonanzfilter, dessen Ausführung in den Figuren 5a-d und deren Beschreibung im Detail erläutert wird, zeichnet sich durch eine niedrigere, abstimmbare Eigenresonanzfrequenz aus. Erreicht wird dies durch eine Verstärkung der induktiven Wirkung des Bauteils, vorzugsweise eines Vielschicht-Keramik-Kondensators, indem dieser mit einem Ringkern aus magnetischem Material, vorzugsweise eines Ferrits, zumindest teilweise, normal zur Stromflussrichtung umschlossen wird. Dieser Ringkern kann dabei auch eine rechteckige Form aufweisen. Durch Variation der Geometrie, insbesondere des Luftspaltes, lässt sich somit die induktive Wirkung des Kondensators erhöhen. Die Eigenresonanzfrequenz des Resonanzfilters wird somit verringert und kann durch entsprechende Dimensionierung des Kerns angepasst werden.

Die Eigenresonanzfrequenz fällt dabei vorteilhaft mit der Frequenz der Ansteuerung des Schaltelements oder deren Harmonischen zusammen. Selbstverständlich können hierfür auch mehrere Resonanzfilter im Eingang sowie Ausgang verwendet werden. In der Praxis erweist sich eine Unterkompensation von etwa 10% der Frequenz meist als vorteilhaft.

Um der Verringerung des Kapazitätswertes des Kondensators bei einer anliegenden Gleichspannung (DC-Bias) und der daraus resultierende Verstimmung des Resonanzkreises entgegenzuwirken, wird erfindungsgemäss zusätzlich die Schaltfrequenz proportional zur Eingangsspannung angepasst und somit die Resonanzbedingung über den gesamten zulässigen Eingangsspannungsbereich aufrecht erhalten.

Der Eingang der Schaltung wurde zusätzlich um einen Verpolungsschutz 5 und eine Sicherung Si erweitert. Die Sicherung hat zur Verlustoptimierung einen geringen Leitwiderstand von wenigen Milliohm. Vorzugsweise handelt es sich dabei um eine Parallelschaltung von mehreren Sicherungen in SMD-Bauweise. Der erfindungsgemässe Verpolungsschutz beruht auf einem N-Kanal-MOSFET NMOS mit geringem Leitwiderstand, welcher erfindungsgemäss vom Eingang +Vin und vom Ausgang +Vout jeweils über einen hochohmigen Widerstand RG1 und RG2 angesteuert wird. Insbesondere bei einem Spannungshochsetzer mit niedriger Spannung am Eingang bewirkt dies ein sicheres Durchschalten des MOSFETs.

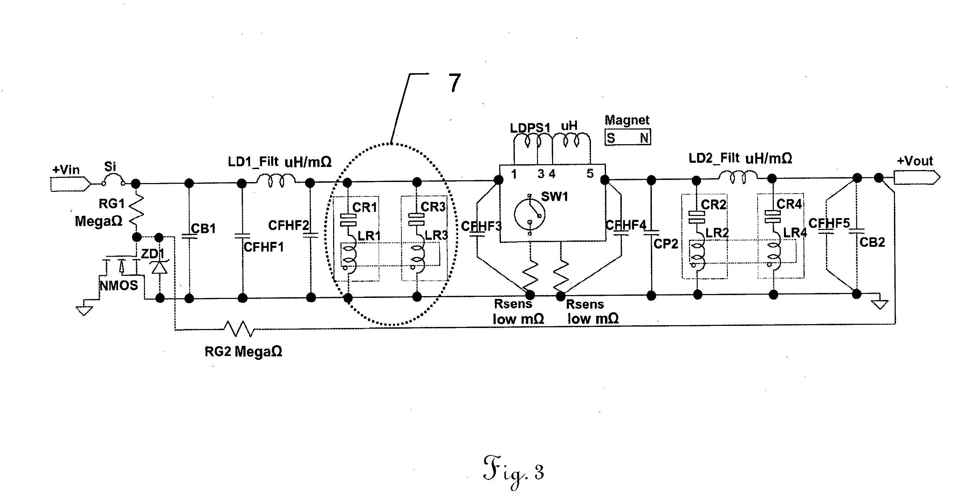

Figur 3 zeigt ein Elektroschema einer dritten erfindungsgemässen Ausführungsform des Schaltwandlers mit weiteren Verbesserungen, aufbauend auf der Schaltung von Figur 2.

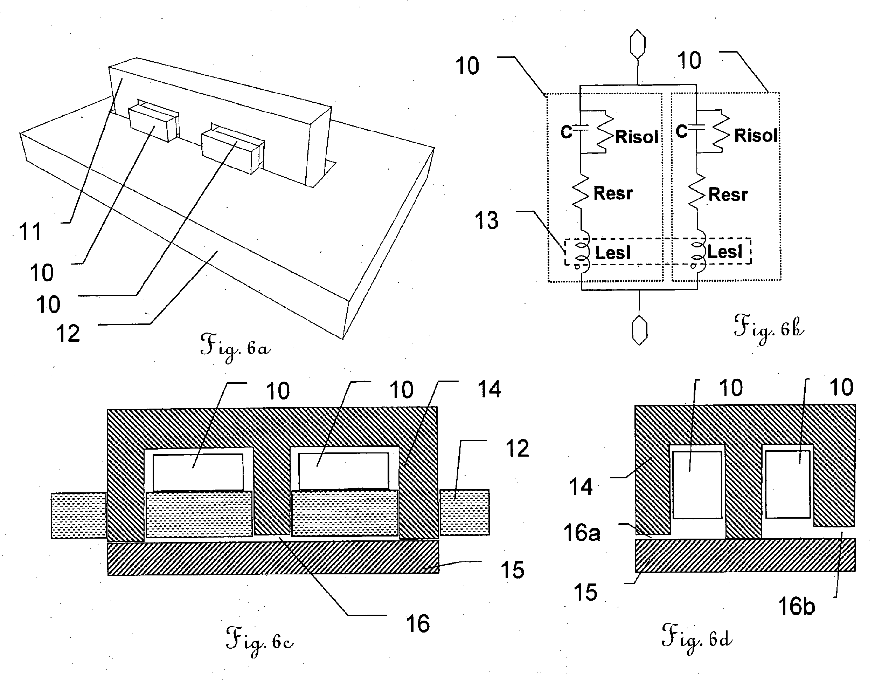

Die aus Figur 3 bekannten Resonanzfilter 6 sind zu magnetisch gekoppelten Resonanzfiltern 7 erweitert. Dies wird erreicht, indem ein Magnetkern mehrere Kapazitäten umschliesst und ihre Magnetfelder entsprechend miteinander verkoppelt, was zu einer weiteren Verschiebung der Resonanzfrequenz führt. Eine genauere Beschreibung dieser Komponenten folgt in den Figuren 6a-d und deren Beschreibung.

Der Verpolungsschutz im Eingang wurde um eine Zehnerdiode ZD1 zum Schutz des Transistors NMOS bei höheren Eingansspannungen erweitert. Um auch hier die Verluste gering zu halten ist auf einen geringen Sperrstrom der Zenerdiode zu achten.

Durch eine weitere Anzapfung der Schaltdrossel, welche mit Anschluss Nummer 3 der Ansteuerung verbunden ist, wird zusätzlich die Ansteuerungsspannung des Schaltelements in Abhängigkeit der Ausgangsleistung in zwei Stufen angepasst. Somit kann über einen weiten Ausgangsleistungsbereich, beispielsweise von 5% bis 100% der Maximalleistung, das Verhältnis von Ansteuerleistung zu Verlustleistung des Schaltelements auf einem optimalen Wert gehalten werden. Beispielsweise kann im Standby-Betrieb eine Ansteuerspannung von +5.4V und im Normalbetrieb eine Ansteuerspannung von +6.3V Verwendung finden.

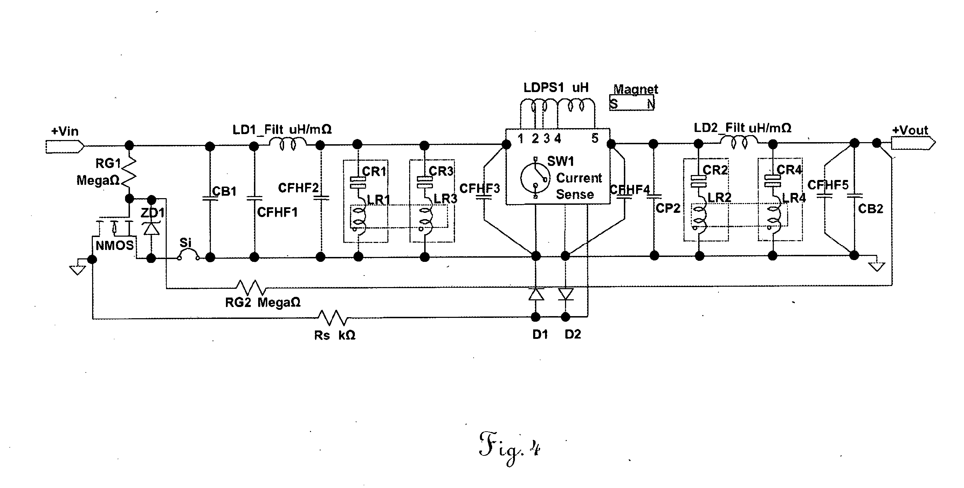

Figur 4 zeigt ein Elektroschema einer vierten erfindungsgemässen Ausführungsform des Schaltwandlers mit weiteren Verbesserungen aufbauend auf den Schaltungen von Figur 1 bis 3.

Im Gegensatz zu den vorherigen Ausführungsformen erfolgt die Strommessung nicht mehr über explizite Shunt-Widerstände, sondern unter Ausnutzung der Leitwiderstände der Sicherung und/oder des Verpolungsschutzes. Durch Ausnutzung dieser bereits vorhandenen Elemente kann die Verlustleistung, welche an den Shunt-Widerständen abfallen würde, eingespart werden. Der Widerstand Rs und die Dioden D1 und D2 dienen lediglich dem Schutz der Ansteuerung, insbesondere der Strommessung, und können ohne Einschränkung der Funktionsweise auch weggelassen werden.

Weiters erfolgt die Anpassung der Ansteuerspannung des Schaltelements an den Lastzustand nun drei Stufen, Symbolisiert durch die Anschlüsse Nummer 2, 3, 4 der Ansteuerung zur Schaltdrossel LDPS1. Zwischen diesen wird entsprechend der zu übertragenden Leistung umgeschaltet.

Figur 5a zeigt eine perspektivische Ansicht einer erfindungsgemässen Ausführungsform des Resonanzfilters mit einem Vielschicht-Keramik-Kondensator 10 in SMD-Bauweise welcher, von einem magnetisch leitfähigen Kern 11 umschlossen, auf einer Printplatte 12 sitzt.

Figur 5b zeigt beispielhaft die Wirkungsweise des Kerns 11 anhand des gebräuchlichen Kondensator-Ersatzschaltbilds, bei welchem sich der Induktivitätswert Lesl durch den Kern erhöht, wie dies bei primär induktiven Komponenten gebräuchlich ist. Der Kern ist hierbei durch die punktierte Linie 13 veranschaulicht.

Figur 5c zeigt eine erfindungsgemässe Ausführungsform eines Resonanzfilters als Schnittdarstellung. Der Kern ist hierbei als rechteckiger U-Kern 14 mit Deckelplatte 15 und Luftspalt 16 ausgeführt. Der Luftspalt 16 kann dabei, wie generell alle aufgeführten Luftspalte, nicht nur mit Luft, sondern auch mit nicht oder schwach magnetischem Material gefüllt sein, beispielsweise um die Produzierbarkeit des Kerns oder die Masshaltigkeit des Luftspaltes zu verbessern.

Figur 5d zeigt eine erfindungsgemässe Ausführungsform eines Resonanzfilters als Schnittdarstellung. Der Kern ist hierbei als Ringkern in Form eines Hohlzylinders ausgeführt und hat keinen Lüftspalt bzw. bei entsprechender Wahl des Kernmaterials einen verteilten Luftspalt.

Figur 6a zeigt eine perspektivische Ansicht einer erfindungsgemässen Ausführungsform des gekoppelten Resonanzfilters auf einer Printplatte 12 mit einem Kern 11 und zwei Kondensatoren 10.

Figur 6b zeigt beispielhaft die erfindungsgemässe Wirkungsweise des Kerns 11 anhand des gebräuchlichen Kondensator-Ersatzschaltbilds, bei welchem die parasitären Induktivitäten Lesl von zwei Kondensatoren durch den Magnetkern miteinander gekoppelt sind. Der Kern und dessen Kopplungswirkung ist hierbei durch die punktierte Linie 13 veranschaulicht.

Figur 6c zeigt eine erfindungsgemässe Ausführungsform eines gekoppelten Resonanzfilters als Schnittdarstellung. Der Kern 14 ist hierbei als E-Kern mit Abdeckplatte 15 und einem Luftspalt 16 im mittleren Schenkel ausgeführt.

Figur 6d zeigt eine erfindungsgemässe Ausführungsform eines gekoppelten Resonanzfilters als Schnittdarstellung. Der E-Kern 14 ist hierbei mit zwei unterschiedlichen Luftspalten 16a, 16b ausgeführt.

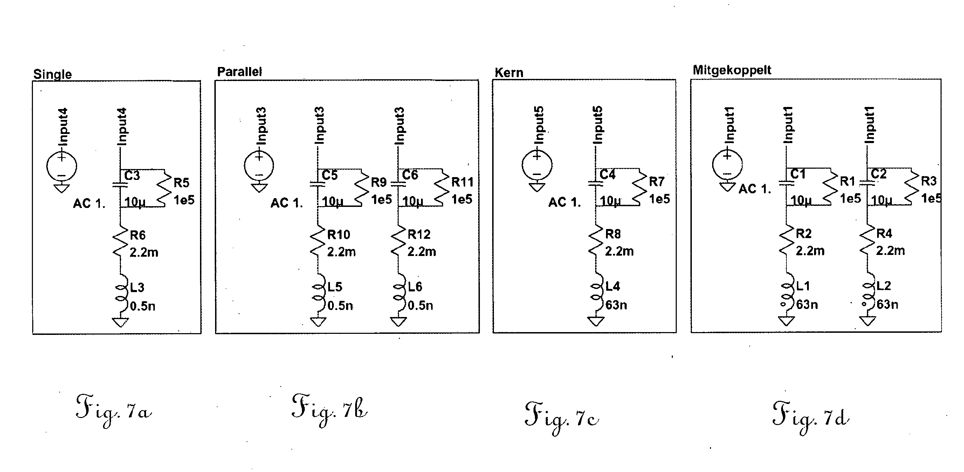

Figur 7ä-d zeigt beispielhaft die Ersatzschaltbilder eines:
a. einfachen Kondensators;
b. zweier parallelgeschalteter Kondensatoren;
c. eines erfindungsgemässen Resonanzfilters;
d. eines erfindungsgemässen gekoppelten Resonanzfilters;
   als Gegenüberstellung.

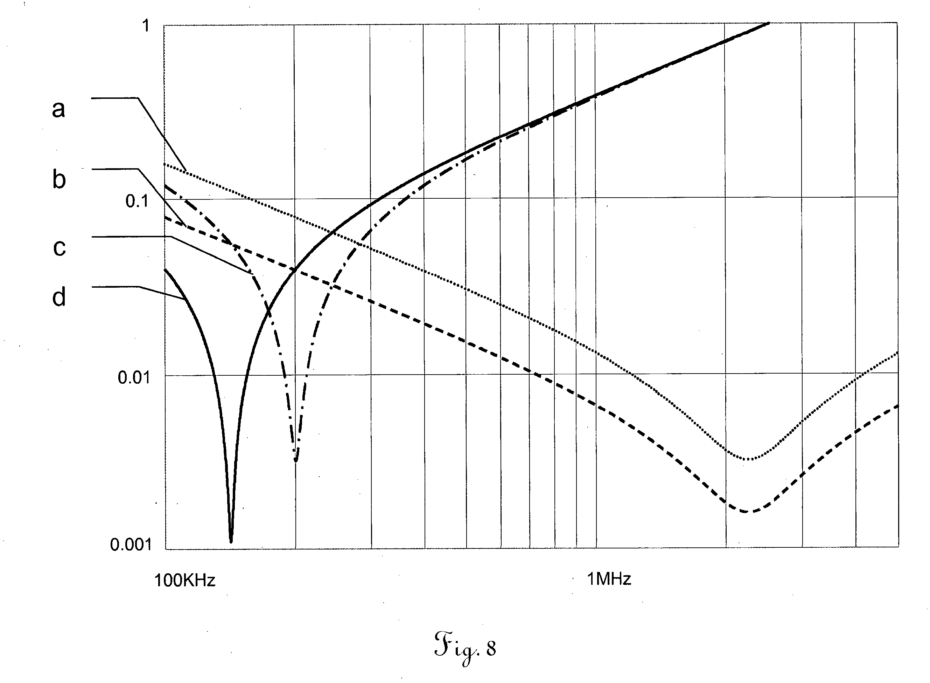

Figur 8 zeigt beispielhaft die Frequenzgänge der Bauteilimpedanzen von einem:
a. einfachen Kondensator;
b. zweier parallelgeschalteter Kondensatoren;
c. erfindungsgemässen Resonanzfilter;
d. erfindungsgemässen gekoppelten Resonanzfilter;
als Gegenüberstellung. Hieraus ist die Verschiebung des Resonanz-Minimums hin zu niedrigeren Frequenzen ersichtlich, welche erfindungsgemäss im Schaltregler ausgenutzt wird.

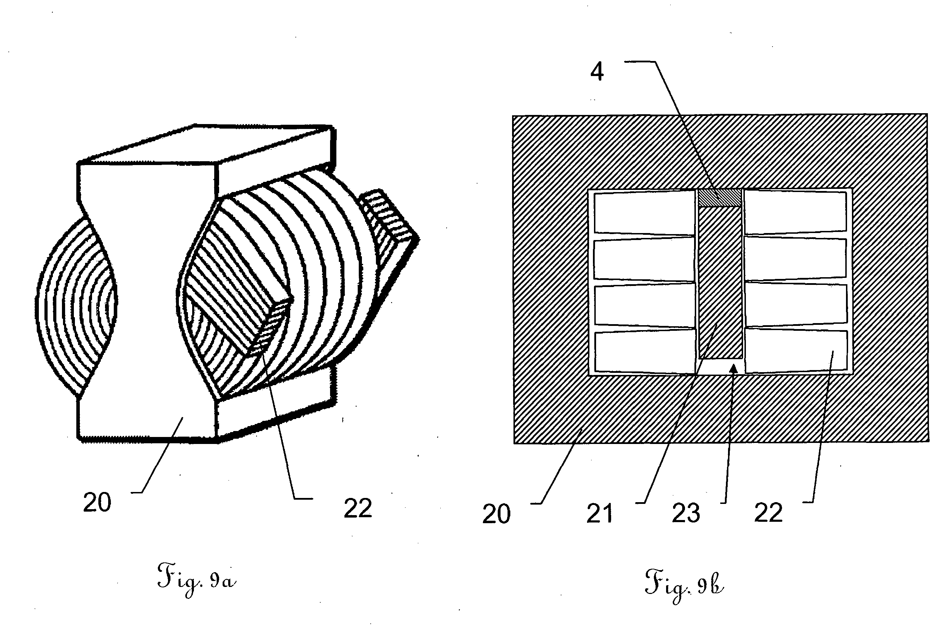

Figur 9a zeigt ein Ausführungsbeispiel einer erfindungsgemässen Schaltdrossel mit einer Flachdrahtwicklung, in der anschaulich der hohe Füllfaktor ersichtlich ist.

Figur 9b zeigt ein Ausführungsbeispiel einer erfindungsgemässen Schaltdrossel mit einer Flachdrahtwicklung als Schnittdarstellung. Es darin die geringere Dimensionierung des Kernbutzens 21 im Vergleich zum Rückschluss 20. dargestellt. Der Wicklungsdraht 22 weist einen rechteckigen Querschnitt auf, welcher bedingt durch die Biegung etwas trapezförmig verformt wurde. Weiters sind ein optionaler Luftspalt 23 und ein mögliche Ausführungsform der Einbringung eines permanentmagnetischen Materials 4 in den Kernbutzen 21 dargestellt. Alternativ dazu kann das permanentmagnetischen Material 4 auch im Bereich des Rückschlusses 20 eingebracht werden.

## Patentansprüche

1. Gleichspannungsschaltwandler
als Aufwärtswandler, Abwärtswandler, Inverswandler oder Aufwärts-Abwärtswandler mit
- einem Eingang (+Vin), - einer Eingangskapazität (CB1),
- einem ersten Filter (1),
- einem zweiten Filter (6),
- einer ersten induktiven Komponente als Schaltdrossel (2),
- zumindest einem Schaltelement (SW1), insbesondere einem Feldeffekt-Transistor, welches durch eine Ansteuerung (3) mit einer Schaltfrequenz geschaltet wird,
- einem Ausgang (+Vout),
wobei
der erste Filter (1) ein PI-Filter ist, welcher bei der Schaltfrequenz und/oder deren harmonischen Oberschwingungen, insbesondere im Bereich von 100kHz bis 1MHz, den Eingang (+Vin) von der Schaltdrossel (2) und dem Schaltelement (SW1) energetisch entkoppelt, und zumindest
- eine zweite induktive Komponente als Filterdrossel (LD1_Filt) und
- zwei Kapazitäten (CFHF1, CFHF2), insbesondere Vielschicht-Keramik-Kondensatoren,
aufweist und
- insbesondere der erste Filter (1) derart ausgelegt ist, dass er bei der Schaltfrequenz mindestens die dreifache, insbesondere die zehnfache, Impedanz im Vergleich zu der Eingangskapazität (CB1) hat und
- insbesondere die zwei Kapazitäten (CFH1, CFH2)..des ersten Filters (1) durch eine Überdimensionierung des Nennspannungs- oder Kapazitätswerts derart ausgelegt sind, dass der Effekt der Verringerung ihres Kapazitätswertes aufgrund einer anliegenden Bias-Gleichspannung weitestgehend oder vollständig kompensiert ist, wobei bei dem zweiten Filter (6) eine Kapazität (10), insbesondere ein Vielschicht-Keramik-Kondensator, mit einem magnetisch leitfähigen Material (11, 14, 15) zumindest teilweise umgeben ist.

2. Gleichspannungsschaltwandler nach Anspruch 1
**dadurch gekennzeichnet, dass**
die Schaltdrossel und/oder Filterdrossel mit
- einer Wicklung (22), insbesondere mit einer Flachdrahtwicklung oder einer HF-Litzen-Wicklung, und
- einem Ferritkern mit
o einem Kernbutzen (21), welcher innerhalb der Wicklung (22) liegt,
o einem magnetischen Rückschluss (20), welcher die Wicklung (22) zumindest teilweise umschließt und
o einem verteilten oder diskreten Luftspalt (23),
ausgebildet ist, wobei
der feldführende Querschnitt des Kernbutzens (21) derart dimensioniert ist, dass
- bei dem im Nennbetrieb maximal auftretenden Strom in der Wicklung (22) die magnetische Flussdichte im Kernbutzen (21) mindestens 90% der magnetischen Sättigung des Ferritkerns beträgt, insbesondere 4500 Gauß oder mehr, und
- der magnetische Rückschluss (20) einen größeren Querschnitt als der Kernbutzen (21) aufweist, insbesondere mehr als 180 % des Querschnitts des Kernbutzens (21), und
- insbesondere der Ferritkern aus einem Material besteht, welches bei einer Betriebstemperatur im Bereich von -10 bis 75°C, insbesondere im Bereich von 10 bis 40°C, ein Minimum an magnetischen Verlusten aufweist und insbesondere das Material bei einer Erhöhung der Temperatur sinkende magnetische Verluste aufweist.

3. Gleichspannungsschaltwandler nach Anspruch 1 oder 2
**dadurch gekennzeichnet, dass**
die Schaltdrossel (2) und/oder Filterdrossel (LD1_Filt) mit einem permanentmagnetischen Material (4) im Kern ausgestattet ist, welches insbesondere derart angeordnet und ausgebildet ist, dass zumindest teilweise ein Gleichanteil des Magnetfeldes eines Stromflusses in der jeweiligen Drossel kompensiert wird.

4. Gleichspannungsschaltwandler nach einem der Ansprüche 1 bis 3
**dadurch gekennzeichnet, dass**
die Wicklung (22) der Schaltdrossel (2) mit zumindest einem weiteren Anschluss zur Versorgung der Ansteuerung (3) oder von Teilen davon ausgeführt ist.

5. Gleichspannungsschaltwandler nach einem der Ansprüche 1 bis 4
**dadurch gekennzeichnet, dass**
der Wert des Stromes in der ersten oder zweiten induktiven Komponente, bei welchem eine magnetische Sättigung des Ferritkerns auftritt, als Schwellwert für eine Strombegrenzung, insbesondere als Abschaltbedingung für das Schaltelement, verwendet wird und
insbesondere der Temperaturkoeffizient der magnetischen Sättigung, den Schwellwert der Strombegrenzung bei höherer Umgebungs- oder Betriebstemperatur reduziert.

6. Gleichspannungsschaltwandler nach einem der Ansprüche 1 bis 5
**dadurch gekennzeichnet, dass**
die Ansteuerung des Schaltelements (SW1) derart angepasst wird, dass eine Ansteuerspannung oder ein Ansteuerstrom des Schaltelements (SW1) eine Funktion des Lastzustands ist, und insbesondere die Ansteuerspannung oder der Ansteuerstrom statisch bei der Auslegung oder dynamisch während des Betriebs, insbesondere in zwei bis drei Stufen, festgelegt wird.

7. Gleichspannungsschaltwandler nach einem der Ansprüche 1 bis 6
**dadurch gekennzeichnet, dass**
ein aktiver Verpolungsschutz (5) im Eingang mit einem Schaltelement, insbesondere einem Feldeffekt-Transistors (NMOS), sowohl vom Eingang als auch vom Ausgang her angesteuert ist.

8. Gleichspannungsschaltwandler nach einem der Ansprüche 1 bis 7
**dadurch gekennzeichnet, dass**
die Ansteuerung einen Strom unter Nutzung des Leitwiderstands des Verpolungsschutzes (5) und/oder einer Sicherung (Si) im Eingang, insbesondere mehrerer parallelgeschalteter Sicherungen, misst.

9. Gleichspannungsschaltwandler nach einem der Ansprüche 1 bis 8
**dadurch gekennzeichnet, dass**
der zweite Filter (6) derart ausgelegt ist, dass für die Schaltfrequenz und/oder deren Harmonische die Resonanzbedingung annähernd erfüllt oder die Resonanzfrequenz um 10-20% höher als die Schaltfrequenz der Ansteuerung liegt und insbesondere ein Dämpfungswiderstand dem zweiten Filter (6) parallelgeschaltet ist und insbesondere die Schaltfrequenz der Ansteuerung abhängig von der am zweiten Filter anliegenden Spannung variiert oder variierbar ist.

10. Gleichspannungsschaltwandler nach einem der Ansprüche 1 bis 8 **gekennzeichnet durch**,
einen dritten Filter (7) als gekoppeltes Resonanzfilter mit mehreren, mit einem magnetisch leitfähigen Material (11, 14, 15) zumindest teilweise umgebenen Kapazitäten (10), insbesondere Vielschicht-Keramik-Kondensatoren, sodass diese miteinander magnetisch gekoppelt sind, wobei der Gleichspannungsschaltwandler den dritten Filter anstatt des zweiten Filters aufweist.

11. Gleichspannungsschaltwandler nach Anspruch 10
**dadurch gekennzeichnet, dass**
der dritte Filter (7) durch Variation der magnetischen Kopplung, insbesondere durch Variation eines oder mehrerer Luftspalte (16, 16a, 16b) der magnetisch leitfähigen Ummantelung (14, 15), mehrere Resonanzfrequenzen aufweist, welche insbesondere auf die Schaltfrequenz und/oder deren Harmonische abgestimmt sind, und insbesondere die Schaltfrequenz abhängig von der am dritten Filter anliegenden Spannung variiert oder variierbar ist.

12. Gleichspannungsschaltwandler nach einem der Ansprüche 1 bis 11
**dadurch gekennzeichnet, dass**
wenigstens eines der Filter
- erstes Filter (1),
- zweites Filter (6),
- drittes Filter (7),
wenigstens als Teil eines Eingangsfilters oder eines Ausgangsfilters ausgebildet ist, insbesondere wobei das Filter im Ausgangsfilter eine induktive Komponente mit kleinerem Induktivitätswert als das Filter im Eingangsfilter aufweist.

13. Gleichspannungsschaltwandler nach einem der Ansprüche 2 bis 12
**dadurch gekennzeichnet, dass**
der Ferritkern derart angebracht und ausgelegt ist, dass dieser als Kühlkörper, insbesondere für die Ansteuerung (3) und/oder das Schaltelement (SW1), wirkt.

14. Gleichspannungsschaltwandlungsverfahren mit
- einem Eingang (+Vin),
- einem Ausgang (+Vout),
- einem Schaltelement (sw1),
- einer Ansteuerung (3),
- einer Schaltdrossel (2),
- einem ersten Filter (1) und
- einem zweiten Filter (6) bei dem eine Kapazität (10), insbesondere ein Vielschicht-Keramik-Kondensator, mit einem magnetisch leitfähigen Material (11, 14, 15) zumindest teilweise umgeben ist,
welches mit den Schritten:
- Eingangsfiltern,
- Schaltwandeln mit einer Schaltfrequenz,
- Ausgangsfiltern,
eine Gleichspannung in eine andere Gleichspannung umwandelt,
wobei mit dem magnetisch leitfähigen Material (11, 14, 15) eine parasitäre Induktivität der Kapazität (10) verstärkt wird, und
ein Entkoppeln des Eingangs (+vin) von der Schaltdrossel (2), insbesondere bei der Schaltfrequenz, und
das Eingangsfiltern und/oder Ausgangsfiltern zumindest annähernd resonant zur Schaltfrequenz und/oder deren Harmonischen durchgeführt wird.

## Claims

1. Direct current switching converter
as step-up converter, step-down converter, inverting converter, or step-up-step-down converter with
an input (+Vin),
an input capacity (CB1)
a first filter (1),
a second filter (6),
a first inductive component as a switching choke (2),
at least one switching element (SW1), in particular a field-effect transistor, which is switched by a control (3) with a switching frequency,
an output (+Vout),
wherein
the first filter (1) is a PI-filter which at the switching frequency and/or its harmonic components, in particular in the range of 100 kHz to 1 MHz, energetically decouples the input (+Vin) of the switching choke (2) and the switching element (SW1), and at least
a second inductive component as a filter choke (LD1_Filt) and
two capacities (CFHF1, CFHF2), in particular multilayer-ceramic-capacitors, are comprised, and
in particular the first filter (1) is configured such that it has at the switching frequency at least the triple, in particular the decuple, impedance in comparison to the input capacity (CB1) and
in particular the two capacities (CFHF1, CFHF2) of the first filter (1) are configured by an oversizing of the nominal voltage value or capacity value such that the effect of the reduction of their capacity value is as far as possible or completely compensated due to the applied bias-direct-voltage,
wherein at the second filter (6) a capacity (10), in particular a multilayer-ceramic-capacitor, is at least partially surrounded with a magnetic conductive material (11, 14, 15).

2. Direct current switching converter according to claim 1,
**characterized in that**
the switching choke and/or the filter choke are arranged with
a winding (22), in particular with a flat wire winding or a HF-stranded-wire winding, and
a ferrite core with
a core button (21) which is located within the winding (22),
a magnetic loopback (20) which surrounds at least partially the winding (22) and
a distributed or discrete air gap (23),
wherein
the field guiding cross-section of the core button (21) is dimensioned such that
at the maximal occurring current in the winding (22) at nominal operation the magnetic flux density in the core button (21) is at least 90% of the magnetic saturation of the ferrite core, in particular 4500 Gauss or more, and
the magnetic loopback (20) comprises a larger cross-section than the core button (21), in particular more than 180% of the cross-section of the core button (21), and
in particular the ferrite core consists of a material which at an operation temperature in the range of -10 to 75°C, in particular in the range of 10 to 40°C, comprises a minimum of magnetic loss and in particular the material comprises decreasing magnetic losses at an increase of the temperature.

3. Direct current switching converter according to claim 1 or 2,
**characterized in that**
the switching choke (2) and/or filter choke (LD1_Filt) is equipped with a permanent magnetic material (4) in the core, which material is in particular arranged and configured such that at least partially a constant component of the magnetic field of a current flow in the respective choke is compensated.

4. Direct current switching converter according to one of the claims 1 to 3,
**characterized in that**
the winding (22) of the switching choke (2) is implemented at least with a further terminal for supplying the control (3) or parts thereof.

5. Direct current switching converter according to one of the claims 1 to 4,
**characterized in that**
the value of the current in the first or second inductive component at which a magnetic saturation of the ferrite core occurs, is used as threshold value for a current limitation, in particular as a shut-off condition for the switching element, and
in particular the temperature coefficient of the magnetic saturation reduces the threshold value of the current limitation at higher surrounding temperature or operation temperature.

6. Direct current switching converter according to one of the claims 1 to 5,
**characterized in that**
the control of the switching element (SW1) is adjusted such that a control voltage or a control current of the switching element (SW1) is a function of the charge state, and in particular the control voltage or the control current is fixed static at the laying or dynamic during the operation, in particular in two to three stages.

7. Direct current switching converter according to one of the claims 1 to 6,
**characterized in that**,
an active reverse-connect protection (5) in the input is controlled with a switching element, in particular a field-effect transistor (NMOS), both from the input and from the output.

8. Direct current switching converter according to one of the claims 1 to 7,
**characterized in that**
the control measures a current by using the conductor resistance of the reverse-connection protection (5) and/or a fuse (Si) in the input, in particular several fuses connected in parallel.

9. Direct current switching converter according to one of the claims 1 to 8,
**characterized in that**
the second filter (6) is configured such that for the switching frequency and/or its harmonics the resonance condition is approximately fulfilled or the resonance frequency is 10-20 % higher than the switching frequency of the control and
in particular an attenuation resistance is connected in parallel to the second filter (6) and
in particular the switching frequency of the control varies or is variable in dependence of the voltage applied at the second filter.

10. Direct current switching converter according to one of the claims 1 to 8,
**characterized by**
a third filter (7) as a coupled resonance filter with several capacities (10) which are at least partially surrounded with a magnetic conductive material (11, 14, 15), in particular multilayer-ceramic-capacitors, such that these are magnetically coupled with each other, wherein the direct current converter comprises the third filter instead of the second filter.

11. Direct current switching converter according to claim 10,
**characterized in that**
the third filter (7) comprises by variation of the magnetic coupling, in particular by variation of one or more air gaps (16, 16a, 16b) of the magnetic conductive casing (14, 15), several resonance frequencies which are adjusted in particular to the switching frequency and/or its harmonics, and in particular the switching frequency varies or is variable in dependence of the voltage applied at the third filter.

12. Direct current switching converter according to one of the claims 1 to 11,
**characterized in that**
at least one of the filter
first filter (1),
second filter (6),
third filter (7),
is configured at least as a part of an input filter or an output filter, in particular wherein the filter in the output filter comprises an inductive component with a smaller inductivity value than the filter in the input filter.

13. Direct current switching converter according to one of the claims 2 to 12,
**characterized in that**
the ferrite core is arranged and configured such that it operates as a cooling element, in particular for the control (3) and/or the switching element (SW1).

14. Direct current switching converting method with
an input (+Vin),
an output (+Vout)
a switching element (SW1),
a control (3),
a switching choke (2),
a first filter (1), and
a second filter (6) at which a capacity (10), in particular a multilayer-ceramic-capacitor, is at least partially surrounded with a magnetic conductive material (11, 14, 15),
which, with the steps:
input filtering,
converting with a switching frequency,
output filtering,
converts a direct voltage into another direct voltage,
wherein with the magnetic conductive material (11, 14, 15) a parasitic inductance of the capacity (10) is enhanced, and
a decoupling of the input (+Vin) of the switching choke (2), in particular at the switching frequency, and
the input filtering and/or output filtering are performed at least approximately resonant to the switching frequency and/or its harmonics.

## Revendications

1. Convertisseur de tension continue
en tant que convertisseur élévateur, convertisseur abaisseur, convertisseur inverseur ou convertisseur élévateur-abaisseur avec
- une entrée (+Vin),
- une capacité d'entrée (CB1),
- un premier filtre (1),
- un deuxième filtre (6),
- un premier composant inductif en tant que bobine de commutation (2),
- au moins un élément de commutation (SW1), en particulier un transistor à effet de champ, qui est commuté par une unité de commande (3) avec une fréquence de commutation,
- une sortie (+Vout),
le premier filtre (1) étant un filtre en pi qui, à la fréquence de commutation et/ou à ses oscillations harmoniques, en particulier dans la plage de 100 kHz à 1 MHz, découple l'entrée (+Vin) de manière énergétique de la bobine de commutation (2) et de l'élément de commutation (SW1), et comprend au moins
- un second composant inductif en tant que bobine de filtrage (LD1_Filt) et
- deux capacités (CFHF1, CFHF2), en particulier des condensateurs céramiques multicouches,
et
- en particulier, le premier filtre (1) étant conçu de manière telle qu'il ait, à la fréquence de commutation, au moins trois fois, en particulier dix fois, l'impédance en comparaison à la capacité d'entrée (CB1) et
- en particulier, les deux capacités (CFHF1, CFHF2) du premier filtre (1) étant conçues par un surdimensionnement de la valeur de tension nominale ou de la valeur de capacité de manière telle que l'effet de la diminution de leur valeur de capacité soit le plus possible ou entièrement compensé en raison d'une tension de polarisation continue appliquée,
pour le deuxième filtre (6), une capacité (10), en particulier un condensateur céramique multicouche, étant entourée au moins en partie d'un matériau magnétiquement conducteur (11, 14, 15).

2. Convertisseur de tension continue selon la revendication 1,
**caractérisé en ce que**
la bobine de commutation et/ou la bobine de filtrage est formée de
- un enroulement (22), en particulier un enroulement de fil plat ou un enroulement de fils toronnés HF, et
- un noyau en ferrite ayant
- une colonne centrale (21) qui est à l'intérieur de l'enroulement (22),
- une culasse magnétique (20) qui englobe au moins partiellement l'enroulement (22) et
- un entrefer (23) réparti ou discret,
la section transversale, guidant le champ, de la colonne centrale (21) étant dimensionnée de manière telle que
- au courant maximal apparaissant en fonctionnement nominal dans l'enroulement (22), la densité du flux magnétique dans la colonne centrale (21) soit au moins 90 % de la saturation magnétique du noyau en ferrite, en particulier 4500 gauss ou plus, et
- la culasse magnétique (20) présente une plus grande section transversale que la colonne centrale (21), en particulier plus de 180 % de la section transversale de la colonne centrale (21), et
- en particulier, le noyau en ferrite soit composé d'un matériau qui, à une température de fonctionnement dans la plage de -10 à 75 °C, en particulier dans la plage de 10 à 40 °C, présente un minimum de pertes magnétiques et, en particulier, le matériau présentant des pertes magnétiques diminuant avec une élévation de la température.

3. Convertisseur de tension continue selon la revendication 1 ou 2,
**caractérisé en ce que**
la bobine de commutation (2) et/ou la bobine de filtrage (LD1_Filt) est équipée dans le noyau d'un matériau magnétique permanent (4), qui est disposé et formé en particulier de manière telle que, au moins partiellement, une partie continue du champ magnétique d'un flux de courant soit compensée dans la bobine respective.

4. Convertisseur de tension continue selon l'une quelconque des revendications 1 à 3,
**caractérisé en ce que**
l'enroulement (22) de la bobine de commutation (2) est exécuté avec au moins un branchement supplémentaire destiné à l'alimentation de l'unité de commande (3) ou à des parties de cette dernière.

5. Convertisseur de tension continue selon l'une quelconque des revendications 1 à 4,
**caractérisé en ce que**
la valeur du courant dans le premier ou dans le second composant inductif, pour laquelle apparaît une saturation magnétique du noyau en ferrite, est employée en tant que valeur de seuil pour une limitation de courant, en particulier en tant que condition d'arrêt pour l'élément de commutation et
en particulier, le coefficient de température de la saturation magnétique réduit la valeur de seuil de la limitation de courant en cas d'élévation de la température ambiante ou opératoire.

6. Convertisseur de tension continue selon l'une quelconque des revendications 1 à 5,
**caractérisé en ce que**
l'unité de commande de l'élément de commutation (SW1) est adaptée de manière telle qu'une tension de commande ou un courant de commande de l'élément de commutation (SW1) soit fonction de l'état de charge, et, en particulier, la tension de commande ou le courant de commande soit déterminé de manière statique lors du dimensionnement ou de manière dynamique durant le fonctionnement, en particulier selon deux à trois niveaux,

7. Convertisseur de tension continue selon l'une quelconque des revendications 1 à 6,
**caractérisé en ce que**
une protection active contre une inversion de polarité (5) dans l'entrée avec un élément de commutation, en particulier un transistor à effet de champ (NMOS), est commandée aussi bien par l'entrée que par la sortie.

8. Convertisseur de tension continue selon l'une quelconque des revendications 1 à 7,
**caractérisé en ce que**
l'unité de commande mesure un courant à l'aide de la résistivité de la protection contre une inversion de polarité (5) et/ou d'un fusible (Si) dans l'entrée, en particulier de plusieurs fusibles montés en parallèle.

9. Convertisseur de tension continue selon l'une quelconque des revendications 1 à 8,
**caractérisé en ce que**
le deuxième filtre (6) est conçu de manière telle que, pour la fréquence de commutation et/ou ses harmoniques, la condition de résonance soit approximativement satisfaite ou que la fréquence de résonance soit d'environ 10 à 20 % plus élevée que la fréquence de commutation de l'unité de commande et que, en particulier, une résistance d'amortissement soit montée en parallèle au deuxième filtre (6) et que, en particulier, la fréquence de commutation de l'unité de commande varie ou soit variable en fonction de la tension appliquée au deuxième filtre.

10. Convertisseur de tension continue selon l'une quelconque des revendications 1 à 8,
**caractérisé par**
un troisième filtre (7), en tant que filtre de résonance couplé, ayant plusieurs capacités (10), en particulier des condensateurs céramiques multicouches, entourées au moins partiellement d'un matériau magnétiquement conducteur (11, 14, 15) de sorte que celles-ci soient couplées magnétiquement entre elles, le convertisseur de tension continue comprenant le troisième filtre à la place du deuxième filtre.

11. Convertisseur de tension continue selon la revendication 10,
**caractérisé en ce que**
le troisième filtre (7), par une variation du couplage magnétique, en particulier par la variation d'un ou de plusieurs entrefers (16, 16a, 16b) de l'entourage magnétiquement conducteur (14, 15), comprend plusieurs fréquences de résonance qui sont ajustées, en particulier sur la fréquence de commutation et/ou ses harmoniques, et, en particulier, la fréquence de commutation varie ou est variable en fonction de la tension appliquée au troisième filtre.

12. Convertisseur de tension continue selon l'une quelconque des revendications précédentes 1 à 11,
**caractérisé en ce qu'**au moins un des filtres
- le premier filtre (1),
- le deuxième filtre (6),
- le troisième filtre (7),
est formé au moins en tant que partie d'un filtre d'entrée ou d'un filtre de sortie, en particulier le filtre dans le filtre de sortie comprenant un composant inductif ayant une valeur d'inductance plus petite que le filtre dans le filtre d'entrée.

13. Convertisseur de tension continue selon l'une quelconque des revendications 2 à 12,
**caractérisé en ce que**
le noyau en ferrite est placé et conçu de manière telle que celui-ci agisse en tant que corps de refroidissement, en particulier pour l'unité de commande (3) et/ou pour l'élément de commutation (SW1).

14. Procédé de conversion de tension continue avec
- une entrée (+Vin),
- une sortie (+Vout)
- un élément de commutation (Sw1),
- une unité de commande (3),
- une bobine de commutation (2),
- un premier filtre (1) et
- un deuxième filtre (6), pour lequel une capacité (10), en particulier un condensateur céramique multicouche, est entourée au moins partiellement d'un matériau magnétiquement conducteur (11, 14, 15),
lequel, avec les étapes :
- filtrage en entrée,
- conversion par commutation avec une fréquence de commutation,
- filtrage en sortie,
convertit une tension continue en une autre tension continue,
une inductance parasite de la capacité (10) étant amplifiée avec le matériau magnétiquement conducteur (11, 14, 15), et
un découplage de l'entrée (+Vin) de la bobine de commutation (2), en particulier à la fréquence de commutation, ainsi que
le filtrage en entrée et/ou le filtrage en sortie étant effectués au moins approximativement de manière résonante à la fréquence de commutation et/ou à ses harmoniques.
